(19) Europäisches Patentamt

European Patent Office

Office européen des brevets

(11) **EP 3 315 913 B1**

(12) **FASCICULE DE BREVET EUROPEEN**

(45) Date de publication et mention de la délivrance du brevet:
**09.12.2020 Bulletin 2020/50**

(51) Int Cl.:
***G01C 21/34*** *(2006.01)*

(21) Numéro de dépôt: **17306325.6**

(22) Date de dépôt: **04.10.2017**

(54) **PROCÉDÉ DE DÉTERMINATION D'UN ITINÉRAIRE MINIMISANT LA DÉPENSE ÉNERGÉTIQUE D'UN VÉHICULE AU MOYEN D'UN GRAPHE ADJOINT**

VERFAHREN ZUR BESTIMMUNG EINER ROUTE MIT MÖGLICHST GERINGEM ENERGIEVERBRAUCH EINES FAHRZEUGS MITHILFE EINER ADJUNGIERTEN GRAPHISCHEN DARSTELLUNG

METHOD FOR DETERMINING AN ITINERARY MINIMISING THE ENERGY CONSUMPTION OF A VEHICLE BY MEANS OF AN ADJUNCT GRAPH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.10.2016 FR 1660326**

(43) Date de publication de la demande:
**02.05.2018 Bulletin 2018/18**

(73) Titulaire: **IFP Energies nouvelles**
**92852 Rueil-Malmaison Cedex (FR)**

(72) Inventeurs:
• **DE NUNZIO, Giovanni**
**69600 Oullins (FR)**
• **THIBAULT, Laurent**
**69001 Lyon (FR)**
• **SCIARRETTA, Antonio**
**92500 Rueil-Malmaison (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**EP-A2- 1 918 895       EP-A2- 2 669 632**
**US-A1- 2003 045 999    US-A1- 2009 138 188**
**US-A1- 2015 268 054    US-A1- 2015 369 620**

• **RAMI ABOUSLEIMAN ET AL: "A Bellman-Ford approach to energy efficient routing of electric vehicles", 2015 IEEE TRANSPORTATION ELECTRIFICATION CONFERENCE AND EXPO (ITEC), 1 juin 2015 (2015-06-01), pages 1-4, XP055386219, DOI: 10.1109/ITEC.2015.7165772 ISBN: 978-1-4673-6741-7**

**Description**

La présente invention concerne le domaine de la navigation des véhicules, et en particulier le domaine de l'éco-navigation (de l'anglais « eco-routing »), qui détermine un itinéraire minimisant l'énergie consommée par le véhicule pour un itinéraire.

Selon l'Agence Internationale de l'Energie, plus du 50% du pétrole utilisé dans le monde est destiné au secteur des transports, dont plus des trois quarts pour les transports routiers. Selon cette même agence, le secteur des transports est responsable pour presque un quart (23.8%) des émissions de gaz à effet de serre et plus d'un quart (27.9%) des émissions de $CO_2$ en Europe en 2006.

Il est donc de plus en plus important d'augmenter l'efficacité énergétique des déplacements routiers, pour réduire la consommation d'énergie, qu'il s'agisse d'énergies fossile ou électrique. Pour y parvenir les systèmes d'assistance à la conduite (ADAS, de l'anglais « Advanced Driver Assistance Systems ») représentent une solution prometteuse, car économique (car on peut utiliser simplement le téléphone intelligent du conducteur) et non intrusive (car on n'a pas besoin d'apporter des modifications aux composants mécaniques du véhicule).

Parmi les systèmes d'assistance aux conducteurs destinés à l'amélioration de l'efficacité énergétique de la conduite, on trouve principalement deux stratégies qui peuvent et devraient être complémentaires : l'éco-conduite et l'éco-navigation (ou « éco-routing »). L'éco-conduite consiste à optimiser en termes de dépense énergétique un profil de vitesse au long d'un parcours. Ce profil de vitesse est ensuite suggéré au conducteur, qui peut réduire la consommation sur son trajet en suivant la trajectoire conseillée. Un exemple de procédé concernant l'éco-conduite est décrit dans la demande de brevet FR 2994923 (US 9286737). L'éco-navigation consiste à identifier la route optimale pour aller d'un point d'origine à un point de destination en minimisant la dépense énergétique, et en prenant en compte une multitude de paramètres comme les caractéristiques du véhicule, les caractéristiques topologiques du réseau routier, les conditions de trafic, etc..

L'éco-navigation a été envisagée dans les demandes de brevet suivants : US 2012123657, US 2012179315, US 2012066232, US 9091560. Toutefois, ces demandes de brevet ne précisent pas de quelle manière est déterminée l'itinéraire qui minimise la consommation énergétique, ni de quelle manière est déterminée la vitesse utilisée pour ces méthodes. Il n'est donc pas possible de connaître la précision obtenue par les méthodes décrites dans ces demandes de brevet.

La demande de brevet EP 2669632 A2, le document « A Bellman-Ford approach to energy efficient routing of electric vehicles » décrivent un procédé pour déterminer un itinéraire minimisant la dépense énergétique.

De plus, la demande de brevet EP 1918895 A2 décrit un dispositif pour fournir des informations de trafic, et la demande de brevet US 2003/0045999 A1 décrit un procédé pour déterminer un itinéraire le plus simple.

D'autres méthodes d'éco-navigation sont basées sur l'algorithme de Dijkstra de plus court chemin, pour déterminer l'itinéraire qui minimise la dépense énergétique. Toutefois, cet algorithme ne prend pas en compte des valeurs négatives. Par conséquent, cet algorithme peut être utilisé uniquement pour des véhicules thermiques, et ne peut pas être utilisé pour des véhicules électriques, pour lesquels une récupération d'énergie est possible (par exemple avec un freinage récupératif). Par conséquent, ces méthodes ne sont pas adaptables à tout type de véhicule. De telles méthodes sont décrites notamment dans les documents suivants :

- Andersen O, Jens CS, Torp K, Yang B (2013), « EcoTour : Reducing the environmental footprint of vehicles using eco-routes », Proc. 2013 IEEE 14th Int. Conf. on Mobile Data Management, Milan, Italy, 3-6 June 2013,
- Boriboonsomsin K, Barth MJ, Zhu W, Vu A (2012), « Eco-routing navigation system based on multisource historical and real-time traffic information », IEEE Trans. on Intelligent Transportation Systems, vol. 13, no. 4, p. 1694-1704,
- Ben Dhaou I, « Fuel estimation model for ECO-driving and ECO-routing », Proc. 2011 IEEE Intelligent Vehicles Symposium, Baden-Baden, Germany, 5-9 June 2011, p. 37-42,
- Ericsson E, Larsson H, Brundell-Freij K (2006), « Optimizing route choice for lowest fuel consumption - Potential effects of a new driver support tool », Transportation research Part C, vol. 14, p. 369-383.

Pour pallier ces inconvénients, la présente invention concerne un procédé de détermination d'un itinéraire minimisant la dépense énergétique d'un véhicule, le procédé est basé sur l'utilisation d'un modèle dynamique du véhicule dépendant de la vitesse et de l'accélération du véhicule, la construction d'un graphe adjoint, et un algorithme de plus court chemin adapté aux énergies négatives. L'utilisation d'un tel modèle dynamique et la construction d'un graphe adjoint permettent une meilleure précision de l'énergie consommée, notamment en prenant en compte les accélérations. L'algorithme adapté aux énergies négatives rend le procédé adaptable à tout type de véhicule, y compris les véhicules électriques.

**Le procédé selon l'invention**

Selon l'invention, un procédé et un produit programme d'ordinateur tels que définis par les revendications 1 et 13 sont proposés. Des variantes de réalisation de l'invention sont définies par les revendications dépendantes.

**Présentation succincte des figures**

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre les étapes du procédé selon un mode de réalisation de l'invention.
La figure 2 illustre les étapes du procédé selon un deuxième mode de réalisation de l'invention.
La figure 3 illustre la construction d'un graphe adjoint selon un mode de réalisation de l'invention.
La figure 4 illustre la vitesse moyenne et les vitesses mesurées sur un premier parcours.
La figure 5 illustre le cumul d'énergie consommée mesurée, le cumul d'énergie consommée déterminée par un modèle selon l'art antérieur, et le cumul d'énergie consommée déterminée par un modèle dynamique selon l'invention, pour l'exemple de la figure 4.
La figure 6 illustre la vitesse moyenne et les vitesses mesurées pour un deuxième parcours.
La figure 7 illustre le cumul d'énergie consommée mesurée, le cumul d'énergie consommée déterminée par un modèle selon l'art antérieur, et le cumul d'énergie consommée déterminée par un modèle dynamique selon l'invention, pour l'exemple de la figure 6.

**Description détaillée de l'invention**

La présente invention concerne un procédé d'éco-navigation, c'est-à-dire un procédé de détermination d'un itinéraire minimisant la dépense énergétique d'un véhicule circulant au sein d'un réseau routier. On appelle itinéraire, le chemin que devrait parcourir un véhicule pour aller d'un point de départ (la position actuelle du véhicule) à un point d'arrivée (la destination du véhicule).

Le procédé selon l'invention est adapté à tout type de véhicule : véhicules thermiques, véhicules hybrides, véhicules électriques.

<u>Notations</u>

Dans la suite de la description, on utilise les notations suivantes :

| | | |
|---|---|---|
| v | Vitesse du véhicule | [m/s] |
| x | Position du véhicule | [m] |
| m | Masse du véhicule | [kg] |
| $\omega$ | Régime du moteur du véhicule | [tr/s] |
| $F_w$ | Effort de traction du véhicule à la roue | [N] |
| $F_{areo}$ | Effort aérodynamique sur le véhicule | [N] |
| $F_{friction}$ | Effort de frottement subis par le véhicule | [N] |
| $F_{slope}$ | Effort normal subi par le véhicule (gravité) | [N] |
| $F_{res}$ | Résultante des pertes aérodynamique et de roulement | [N] |
| $\alpha$ | Angle d'inclinaison de la route | [rad] |
| $\rho_a$ | Densité de l'air | [kg/m$^3$] |
| $A_f$ | Surface frontale du véhicule | [m2] |
| $c_d$ | Coefficient de résistance aérodynamique | [-] |
| $c_r$ | Coefficient de résistance au roulement | [-] |
| g | Accélération gravitationnelle | [m$^2$/s] |
| $a_0$, $a_1$ et $a_2$ | Paramètres du véhicule | [-] |
| r | Rayon de la roue | [m] |
| $\rho_t$ | Rapport de la transmission du véhicule | [-] |
| $\eta_t$ | Rendement de la transmission du véhicule | [-] |
| $T_m$ | Couple moteur | [Nm] |

(suite)

| | | |
|---|---|---|
| $T_{m,max}$ | Couple moteur maximal | [Nm] |
| $T_{m,min}$ | Couple moteur minimal | [Nm] |
| $P_m$ | Puissance disponible sur l'arbre moteur | [W] |
| $P_b$ | Puissance demandée à la batterie | [W] |
| $\eta_b$ | Rendement agrégé de la chaîne de traction électrique | [-] |
| $P_{aux}$ | Puissance des auxiliaires du véhicule | [W] |
| $T_{amb}$ | Température ambiante | [K] |
| i | Segment de route i | [-] |
| i-1 | Segment de route, précédent le segment de route i | [-] |
| $\bar{v}$ | Vitesse moyenne du trafic | [m/s] |
| K | Fonction | |
| $\bar{E}_i$ | Energie consommée sur le segment i | [Wh] |
| $E_b$ | Energie consommée à la batterie | [Wh] |
| $\bar{P}_i$ | Puissance du véhicule sur le segment i à la vitesse moyenne | [W] |
| $\tilde{P}_i$ | Puissance du véhicule sur le segment i à vitesse variable | [W] |
| $T_i$ | Temps de parcours sur le segment i | [s] |
| $l_i$ | Longueur du segment i | [m] |
| $E_{jump,i}$ | Energie consommée associée à la variation de vitesse pour le segment | i[Wh] |
| $t_{jump,i}$ | Temps pour réaliser la variation de la vitesse pour le segment i | [s] |
| $W_k^*$ | Poids de l'arc du graphe adjoint | [Wh] |

Pour ces notations, la dérivée par rapport au temps est notée $\frac{d}{dt}$ ou par un point au-dessus de la variable considérée.

Le procédé selon l'invention comporte les étapes suivantes :

1) identification de la position et de la destination du véhicule

2) construction d'un modèle dynamique du véhicule

3) construction d'un graphe adjoint

4) détermination de l'énergie consommée sur le graphe adjoint

5) détermination de l'itinéraire.

Les étapes de construction du modèle dynamique du véhicule et de construction du graphe adjoint peuvent être réalisées dans cet ordre, simultanément ou dans l'ordre inverse.

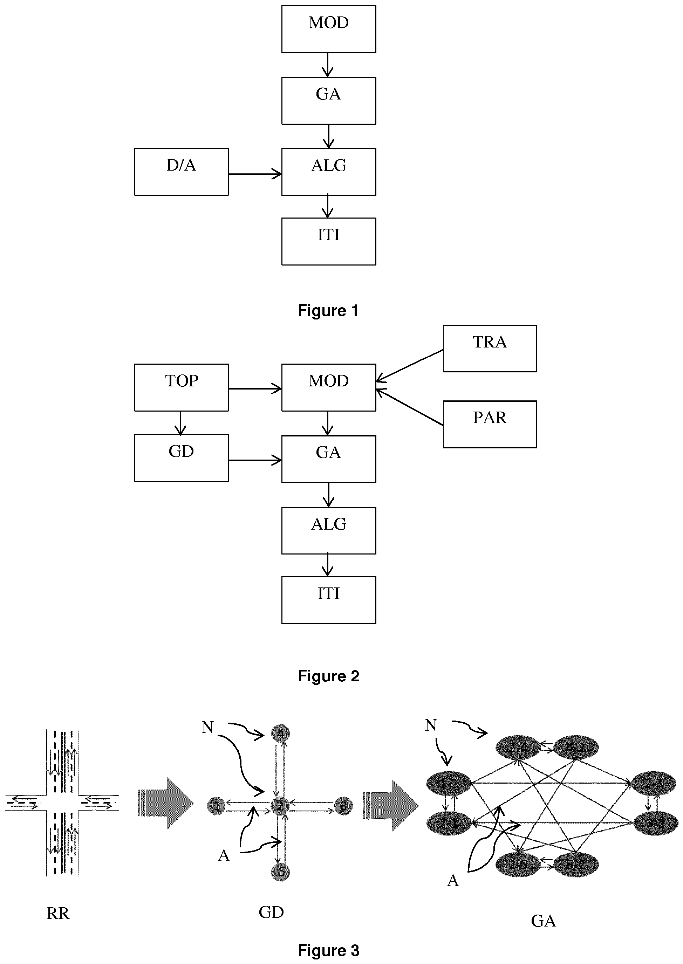

La figure 1 illustre, schématiquement et de manière non limitative, les étapes du procédé selon un mode de réalisation de l'invention.

1) identification de la position et de la destination du véhicule (D/A)

2) construction du modèle dynamique du véhicule (MOD)

3) construction du graphe adjoint (GA)

4) détermination de l'énergie consommée sur le graphe adjoint, au moyen du modèle dynamique (MOD) et du graphe adjoint (GA)

5) détermination de l'itinéraire (ITI) d'éco-navigation au moyen d'un algorithme de plus court chemin (ALG) appliqué au graphe adjoint (GA) pondéré par l'énergie consommée.

La figure 2 illustre, schématiquement et de manière non limitative, les étapes du procédé selon un deuxième mode de réalisation de l'invention. En plus des étapes décrites en relation avec la figure 1, le procédé comporte les étapes facultatives suivantes :

- détermination de la topologie du réseau routier (TOP), la topologie du réseau routier peut servir à la construction du modèle dynamique (MOD) et à la construction du graphe adjoint (GA),
- détermination du trafic routier (TRA), la détermination du trafic peut servir à la construction du modèle dynamique (MOD) et à la construction du graphe adjoint (GA),
- détermination des paramètres intrinsèques du véhicule (PAR), ces paramètres peuvent servir à la construction du modèle dynamique (MOD),
- construction d'un graphe direct (GD) du réseau routier, le graphe direct peut être obtenu au moyen de la topologie (TOP) du réseau routier, et peut servir à la construction du graphe adjoint (GA).

Les étapes de détermination de la topologie du réseau routier (TOP), du trafic routier (TRA) et des paramètres intrinsèques du véhicule (PAR) sont indépendantes. Il est donc possible de réaliser seulement une partie de ces étapes.
Toutes les étapes du procédé, y compris leurs variantes proposées sur la figure 2 sont décrites ci-dessous.

1) Identification de la position et de la destination du véhicule

Lors de cette étape, on identifie la position actuelle et la destination du véhicule. En d'autres termes, on identifie le départ et l'arrivée de l'itinéraire à parcourir.
La position actuelle du véhicule peut être identifiée au moyen d'un système de géolocalisation (par exemple de type GPS ou Galiléo). Alternativement, la position actuelle peut être indiquée par un utilisateur au moyen d'une interface avec celui-ci (par exemple un téléphone intelligent, le tableau de bord, ou un système de géolocalisation).
La destination du véhicule peut être indiquée par un utilisateur au moyen d'une interface avec celui-ci. Alternativement, la destination peut être stockée dans une base de données, par exemple s'il s'agit d'une destination préalablement connue (par exemple un téléphone intelligent, le tableau de bord, ou un système de géolocalisation).

2) Construction du modèle dynamique du véhicule

Lors de cette étape, on construit un modèle dynamique du véhicule. On appelle modèle dynamique du véhicule, un modèle qui relie l'énergie consommée par le véhicule à la vitesse et à l'accélération du véhicule. Le modèle dynamique du véhicule peut être construit au moyen du principe fondamental de la dynamique, associé à un modèle énergétique de la motorisation.
Selon une mise en œuvre de l'invention (cf. étape de détermination des paramètres intrinsèques du véhicule de la figure 2), le modèle peut être construit à partir de paramètres macroscopiques du véhicule, par exemple : motorisation du véhicule, masse du véhicule, puissance maximale, vitesse maximale, type de transmission, paramètres aérodynamiques, etc.. Ainsi, le modèle dynamique est représentatif du véhicule, et prend en compte ses caractéristiques spécifiques.
Selon une variante de réalisation, les paramètres macroscopiques peuvent être obtenus depuis une base de données, qui répertorie les différents véhicules en circulation. Par exemple, les paramètres macroscopiques peuvent être obtenus en indiquant le numéro d'immatriculation du véhicule, la base de données associant le numéro de plaque à sa conception (marque, modèle, motorisation...), et comprenant les paramètres macroscopiques du véhicule. Alternativement, les paramètres macroscopiques peuvent être des données constructeurs renseignées par l'utilisateur, en particulier au moyen d'une interface (par exemple un téléphone intelligent, le tableau de bord, ou un système de géolocalisation).
Le modèle dynamique du véhicule peut également dépendre de paramètres de la route, tels que la pente de la route. De telles données peuvent être obtenues à partir d'une topologie (cf. étape de détermination de la topologie de la figure 2) ou d'une cartographie du réseau routier.
Le modèle dynamique du véhicule prend en compte la dynamique du véhicule. Il peut être construit à partir de l'application du principe fondamental de la dynamique du véhicule appliqué sur son axe longitudinal, et peut s'écrire sous la forme suivante :

$$m \frac{dv(t)}{dt} = F_w - F_{aero} - F_{friction} - F_{slope}$$

Où $m$ est la masse du véhicule, $v(t)$ sa vitesse, $F_w$ la force à la roue, $F_{aero}$ la force aérodynamique, $F_{friction}$ la force de résistance au roulement, $F_{slope}$ la force gravitationnelle. Donc, le modèle peut être récrit :

$$\begin{cases} \dot{x}(t) = v(t) \\ m\dot{v}(t) = F_w - \dfrac{1}{2}\rho_a A_f c_d v(t)^2 - mgc_r - mg\sin\big(\alpha(x)\big) \end{cases}$$

Où $\rho_a$ est la densité de l'air, $A_f$ la surface frontale du véhicule, $c_d$ le coefficient de résistance aérodynamique, $c_r$ le coefficient de résistance au roulement, $\alpha(x)$ la pente de la route en fonction de la position, et $g$ l'accélération gravitationnelle. La somme des pertes aérodynamiques et de roulement sont généralement approximées avec un polynôme de second ordre en fonction de la vitesse $v$ :

$$F_{res} = F_{aero} + F_{friction} = a_2 v(t)^2 + a_1 v(t) + a_0$$

Où les paramètres $a_0$, $a_1$ et $a_2$ peuvent être identifiés pour le véhicule considéré à partir d'un essai standard appelé « coast down », signifiant pente descendante.
Donc, la force à la roue peut être exprimée comme :

$$F_w = m\dot{v}(t) + a_2 v(t)^2 + a_1 v(t) + a_0 + mg\sin\big(\alpha(x)\big)$$

Dans la suite, le modèle dynamique du véhicule est décrit pour un mode de réalisation non limitatif d'un véhicule électrique. Le véhicule électrique comprend au moins une machine électrique, au moins un moyen de stockage de l'énergie électrique (telle qu'une batterie) pour alimenter le moteur électrique ou pour être alimentée par la machine électrique (dans le cas de freinage récupératif) et des moyens de récupération de l'énergie, notamment des moyens de freinage récupératif. Toutefois, le modèle est adaptable à tout type de motorisation (thermique, hybride, électrique).
Le couple demandé à la machine électrique pour réaliser la force requise à la roue est défini comme (dans les équations « if » est la traduction anglaise de « si ») :

$$T_m = \begin{cases} \dfrac{F_w r}{\rho_t \eta_t}, & if \quad F_w \geq 0 \\ \dfrac{F_w r \eta_t}{\rho_t}, & if \quad F_w < 0 \end{cases}$$

Où $r$ est le rayon de roue, $\rho_t$ et $\eta_t$ sont le rapport de transmission et le rendement de transmission. Une machine électrique est en général une machine réversible, donc elle se comporte comme un moteur quand $T_m$ est positif et comme un générateur (récupération d'énergie) quand $T_m$ est négatif. Le couple généré par la machine électrique est saturé par $T_{m,max}$ et $T_{m,min}$. En particulier, pendant les phases de freinage, si le couple moteur est moins négatif que la valeur de saturation $T_{m,min}$, alors le véhicule n'est freiné que par le système de freinage récupératif. Autrement, le frein mécanique intervient en ajoutant son action au freinage récupératif.
La puissance disponible à l'arbre moteur, en présence d'un système de freinage récupératif, peut être définie comme :

$$P_m = \begin{cases} T_{m,max}\omega(t), & if \ T_m \geq T_{m,max} \\ T_m\omega(t), & if \ T_{m,min} < T_m < T_{m,max} \\ T_{m,min}\omega(t), & if \ T_m \leq T_{m,min} \end{cases}$$

Où $\omega_t$ est le régime moteur qui est défini comme :

$$\omega(t) = \frac{v(t)\rho_t}{r}$$

La demande de puissance à la batterie est exprimée comme suit :

$$P_b = \begin{cases} \dfrac{P_m}{\eta_b}, & if \quad P_m \geq 0 \\[2mm] P_m \eta_b, & if \quad P_m < 0 \end{cases}$$

Où $\eta_b$ est le rendement agrégé de la chaine de traction électrique (inverter, batterie, etc.).

Selon un mode de réalisation de l'invention, pour améliorer la précision du modèle et de l'estimation de la consommation énergétique d'un trajet, on peut tenir compte de la demande de puissance d'au moins un système auxiliaire dans le modèle de dynamique du véhicule. En effet, la puissance demandée par le conducteur pour le confort, notamment pour le chauffage de l'habitacle ou pour l'air conditionné, est particulièrement onéreuse en termes de consommation énergétique, notamment pour un véhicule électrique sur lequel le chauffage peut avoir un impact très fort sur l'autonomie. Le terme de puissance demandée par les auxiliaires peut être exprimé comme une fonction de la température ambiante :

$P_{aux} = K(T_{amb})$

Donc, pour ce mode de réalisation, la consommation énergétique à la batterie sur un horizon temporel T peut être définie comme :

$$E_b = \int_0^T P_b + P_{aux} \, dt$$

Le modèle décrit ci-dessus requiert un signal de vitesse instantanée. Cette information n'est pas disponible à priori sur les segments de route (portions de route du réseau routier), sur lesquels les seules informations disponibles sont des vitesses moyennes.

Selon l'invention, on considère dans un premier temps une vitesse moyenne sur chaque segment de route, puis on considère l'accélération du véhicule pour atteindre cette vitesse moyenne depuis le segment précédent. De préférence, la vitesse moyenne peut être obtenue à partir d'informations sur le trafic routier sur le réseau routier.

Selon une variante, la vitesse moyenne sur un segment peut être obtenue en temps réel par communication avec des services de données en ligne, qui acquièrent en temps réel des informations sur la circulation sur le réseau routier. Cette étape facultative de détermination du trafic est décrite pour le mode de réalisation de la figure 2.

Alternativement, la vitesse moyenne peut être stockée par des moyens de stockage de données historiques, qui stockent des données de circulation sur le réseau routier, notamment pour différents jours, différentes heures....

Ainsi, si on suppose connue la vitesse moyenne $\bar{v}$ due au trafic d'un segment de route, on peut modifier le modèle décrit ci-dessus pour estimer la consommation énergétique du véhicule pour parcourir le segment de route considéré. Par la suite, on remplace dans le modèle dynamique la vitesse $v(t)$ par la vitesse moyenne du trafic $\bar{v}$. On suppose, donc, que tous les véhicules sur le segment de route i roulent à la vitesse $\bar{v}_i$. Donc, l'expression de la force à la roue est modifiée pour chaque segment de route i :

$$\bar{F}_{w,i} = a_2 \bar{v}_i^2 + a_1 \bar{v}_i + a_0 + mg \sin\big(\alpha_i(x)\big)$$

Où le terme d'accélération disparait. Le couple moteur devient :

$$\bar{T}_{m,i} = \begin{cases} \dfrac{\bar{F}_{w,i} r}{\rho_t \eta_t}, & if \quad \bar{F}_{w,i} \geq 0 \\[3mm] \dfrac{\bar{F}_{w,i} r \eta_t}{\rho_t}, & if \quad \bar{F}_{w,i} < 0 \end{cases}$$

Le régime moteur est aussi constant dans le temps puisque on assume une vitesse constante $\bar{v}_i$ :

$$\bar{\omega}_i = \frac{\bar{v}_i \rho_t}{r}$$

La puissance mécanique disponible à la machine électrique est récrite comme suit :

$$\bar{P}_{m,i} = \begin{cases} T_{m,max} \cdot \bar{\omega}_i, & if \ \bar{T}_{m,i} \geq T_{m,max} \\ \bar{T}_{m,i} \cdot \bar{\omega}_i, & if \ T_{m,min} < \bar{T}_{m,i} < T_{m,max} \\ T_{m,min} \cdot \bar{\omega}_i, & if \ \bar{T}_{m,i} \leq T_{m,min} \end{cases}$$

Dans ce qui suit, on suppose que les valeurs de saturation du couple sont indépendantes du régime moteur. Toutefois, d'autres modes de réalisation sont valables, notamment les couples maximal et minimal peuvent être dépendants du régime moteur.

La demande de puissance à la batterie du véhicule électrique peut être définie comme :

$$\bar{P}_{b,i} = \begin{cases} \dfrac{\bar{P}_{m,i}}{\eta_b}, & if \ \bar{P}_{m,i} \geq 0 \\ \bar{P}_{m,i}\eta_b, & if \ \bar{P}_{m,i} < 0 \end{cases}$$

La consommation énergétique de la batterie est donc :

$$\bar{E}_{b,i} = \left( \bar{P}_{b,i} + P_{aux} \right) T_i$$

Où $T_i = l_i/\bar{v}_i$ est le temps de parcours sur le segment de route i si on roule à la vitesse moyenne du trafic $\bar{v}_i$.

L'utilisation de la vitesse moyenne dans les modèles de consommation énergétique représente une approche standard dans l'art antérieur. Le procédé selon l'invention propose la prise en compte de l'accélération dans le modèle dynamique du véhicule pour une estimation plus précise et fiable de la vraie consommation. Pour la prise en compte des phénomènes d'accélération, le parcours sur chaque segment de route est divisé en deux phases : une phase à vitesse de croisière constante $\bar{v}_i$, et une phase de variation de la vitesse (c'est-à-dire d'accélération ou de décélération) pour aller de la vitesse $\bar{v}_{i-1}$, c'est-à-dire la vitesse moyenne du segment précédent, à la vitesse $\bar{v}_i$, c'est-à-dire la vitesse moyenne du segment actuel. De préférence, on considère une accélération (ou une décélération) constante pour atteindre la vitesse $\bar{v}_i$. Donc, même si les informations macroscopiques disponibles ne permettent pas de connaître l'information temporelle, l'accélération spatiale ayant lieu à l'interface entre deux segments de route est considérée. La consommation d'énergie $E_{jump,i}$ associée avec la variation de vitesse entre deux segments de route est définie comme :

$$E_{jump,i} = \int_0^{t_{jump,i}} \left( \tilde{P}_{b,i} + P_{aux} \right) dt$$

Avec $\tilde{P}_{b,i}$ la demande de puissance à la batterie pour la phase d'accélération pour aller de la vitesse $\bar{v}_{i-1}$, à la vitesse $\bar{v}_i$.

Une telle demande de puissance à la batterie peut être obtenue, comme vu précédemment, à partir d'une force à la roue d'interface définie comme :

$$\tilde{F}_w = m \cdot a + a_2 v(t)^2 + a_1 v(t) + a_0$$

Où la vitesse variante dans le temps $v(t)$ dans chaque transitoire peut être ici linéairement modélisée comme :

$$v(t) = \bar{v}_{i-1} + sign(\bar{v}_i - \bar{v}_{i-1}) \cdot a \cdot t$$

Où $\bar{v}_{i-1}$ est la vitesse sur le segment en amont, $\bar{v}_i$ est la vitesse sur le segment en aval, $a$ est l'accélération constante pour réaliser le changement de vitesse. La variation de vitesse est donc réalisée en :

$$t_{jump,i} = \frac{\bar{v}_i - \bar{v}_{i-1}}{sign(\bar{v}_i - \bar{v}_{i-1}) \cdot a}$$

La consommation totale d'énergie sur le segment i est ainsi définie :

$$E_{b,i} = \bar{E}_{b,i} + E_{jump,i}$$

La prise en compte des accélérations d'interface rend le modèle plus précis. Cependant, les informations disponibles à priori ne sont pas toujours complètes ou à jour. Notamment, il n'est pas probable d'avoir des informations précises sur les vitesses moyennes du trafic pour des rues secondaires. Par conséquent, il est possible d'avoir des longues portions de route sur lesquelles la vitesse du trafic sera simplement une valeur nominale constante. Dans ce cas, une prise en compte uniquement des données du réseau routier consisterait à supposer qu'il n'y ait aucune accélération ce qui générerait de grosses erreurs dans l'estimation de la consommation énergétique. C'est la raison pour laquelle l'invention permet également d'enrichir les données sur le réseau routier en intégrant les perturbations de vitesse induites par des éléments critiques de l'infrastructure routière, notamment les feux tricolores, les intersections et les virages. Par exemple, si on sait qu'un feu de signalisation est localisé à l'interface entre deux segments, on tient compte de son impact dans l'estimation de la consommation, en prenant compte de la variation de la vitesse entre les deux segments.

La prise en compte de ces accélérations permet, non seulement d'obtenir des coûts énergétiques plus réalistes et précis, mais également d'éviter des boucles négatives dans le graphe de routage qui modélise le réseau routier. En effet, la boucle négative représente une séquence de segments de route qui a le même point de départ et arrivée avec un coût total négatif. Dans le cas spécifique d'un graphe pondéré avec des poids énergétiques, cela représente une situation de récupération infinie d'énergie si on parcourt la boucle en continu, ce qui est impossible en réalité. Cette criticité se vérifie facilement si on considère des véhicules électriques et si l'estimation de la consommation sur un segment de route et de ses voisins ne tient pas en compte d'éléments importants comme la pente et/ou les accélérations pour transiter d'un segment au suivant. La présence de boucles négatives dans le graphe de routage empêche de trouver un trajet qui minimise globalement la consommation, car l'algorithme de recherche irait converger de façon triviale sur ces boucles pour réduire la consommation.

Conformément à une mise en œuvre de l'invention, la variation de vitesse entre les deux segments peut être modélisée comme deux transitoires : le premier pour aller de la vitesse $\bar{v}_{i-1}$ à 0 (arrêt du véhicule, par exemple à un feu tricolore), et le seconde pour aller de 0 à la vitesse $\bar{v}_i$. Donc, la consommation d'énergie, liée à la variation de la vitesse peut être décrite comme la somme de deux contributions :

$$E_{jump,i} = \int_0^{t_{jump1,i}} (\tilde{P}_{b1,i} + P_{aux}) \, dt + \int_0^{t_{jump2,i}} (\tilde{P}_{b2,i} + P_{aux}) \, dt$$

Où la variation de vitesse dans le premier terme est modelée comme :

$$v_1(t) = \bar{v}_{i-1} - a \cdot t$$

Et le temps pour réaliser la première variation :

$$t_{jump1,i} = \bar{v}_{i-1}/a$$

De même, la variation de vitesse dans le deuxième terme est modelée comme :

$$v_2(t) = a \cdot t$$

Et le temps pour réaliser cette variation :

$$t_{jump2,i} = \overline{v}_i / a$$

Par conséquent, selon l'invention, le modèle dynamique du véhicule peut s'écrire (pour tout type de véhicule) :

$$E_i = \overline{P}_i T_i + \int_0^{t_{jump,i}} \tilde{P}_i \, dt$$

Avec $E_i$ l'énergie consommée sur le segment i, $\overline{P}_i$ la puissance demandée au système de stockage d'énergie du véhicule (réservoir de carburant, batterie, etc.) lorsque le véhicule est considéré à vitesse constante sur le segment i, $T_i$ le temps pendant lequel le véhicule est considéré à vitesse constante sur le segment i, $\tilde{P}_i$ la puissance demandée au système de stockage d'énergie du véhicule lorsque le véhicule est considéré ayant une variation de vitesse (variation de vitesse entre le segment i-1 et le segment i), et $t_{jump,i}$ le temps pour réaliser la variation de vitesse. Le premier terme du modèle correspondant à l'énergie consommée sur le segment due à la vitesse moyenne, et le deuxième terme correspond à l'énergie consommée due à la variation de vitesse pour atteindre la vitesse moyenne.

Pour le mode de réalisation, selon lequel on prend en compte la demande de puissance d'au moins un système auxiliaire, le modèle dynamique du véhicule peut s'écrire (pour tout type de véhicule) :

$$E_i = (\overline{P}_i + P_{aux}) T_i + \int_0^{t_{jump,i}} (\tilde{P}_i + P_{aux}) \, dt$$

Avec $E_i$ l'énergie consommée sur le segment i, $\overline{P}_i$ la puissance demandée au système de stockage d'énergie du véhicule (réservoir de carburant, batterie, etc.) lorsque le véhicule est considéré à vitesse constante sur le segment i, $P_{aux}$ la demande de puissance d'au moins un système auxiliaire, $T_i$ le temps pendant lequel le véhicule est considéré à vitesse constante sur le segment i, $\tilde{P}_i$ la puissance demandée au système de stockage d'énergie du véhicule lorsque le véhicule est considéré ayant une variation de vitesse (variation de vitesse entre le segment i-1 et le segment i), et $t_{jump,i}$ le temps pour réaliser la variation de vitesse. Le premier terme du modèle correspondant à l'énergie consommée sur le segment due à la vitesse moyenne, et le deuxième terme correspond à l'énergie consommée due à la variation de vitesse pour atteindre la vitesse moyenne.

On rappelle que pour un véhicule électrique, l'énergie consommée peut être négative. En effet, le freinage peut permettre de récupérer de l'énergie dans la batterie.

### 3) Construction du graphe adjoint

Lors de cette étape, on construit un graphe adjoint du réseau routier. On appelle, en théorie des graphes, un graphe adjoint d'un graphe $G$ (dans ce cas le réseau routier), un graphe qui représente la relation d'adjacence entre les arêtes de $G$. Le graphe adjoint d'un graphe peut être défini de la manière suivante : chaque sommet du graphe adjoint représente une arête (appelé également arc) du graphe $G$, et deux sommets du graphe adjoint sont adjacents (c'est-à-dire reliés) si et seulement si les arêtes correspondantes partages une extrémité commune dans le graphe $G$. Ainsi, le graphe adjoint est une représentation équivalente du réseau routier où toutes les manœuvres sont correctement découplées et distinguées, ce qui permet une détermination précise des coûts énergétiques.

Pour les méthodes selon l'art antérieur, le réseau routier peut être modélisé comme un graphe orienté (« Directed Graph »). Soit le graphe $G = (V,A)$, où $V$ est l'ensemble des nœuds et $A$ est l'ensemble des connections entre les nœuds, c'est-à-dire les arcs. Soit $w: A \rightarrow W$ une fonction qui assigne un poids à chaque arc du graphe. Dans les graphes utilisés pour la navigation conventionnelle, le poids associé aux arcs représente soit la longueur soit le temps de parcours. Pour l'éco-navigation, chaque poids représente la consommation énergétique pour parcourir l'arc.

Selon un mode de réalisation de l'invention, l'objectif de ce travail peut être de concevoir une stratégie fondée uniquement sur des informations statistiques et topologiques du réseau routier, sans aucune utilisation de données réelles de conduite. Ce type d'informations, bien souvent incomplètes et/ou imprécises, est généralement disponible sur des web-services (services en ligne) de cartographie payants. Pour chaque arc $i \in A$ du graphe, il est possible de connaître la longueur, la vitesse moyenne du trafic actuelle $v_j$ qui dépend de l'heure de la journée, et la pente de $\alpha_j(x)$ qui varie à l'intérieur de l'arc considéré en fonction de la position. En outre, certaines web-services de cartographie fournissent un degré d'importance de chaque segment de route, en précisant si c'est une autoroute, un grand axe urbain, ou une rue urbaine secondaire. En outre, la position de certains feux de circulation peut être disponible.

Au moyen du procédé selon l'invention, il est possible d'améliorer considérablement la précision de l'estimation de la consommation d'énergie et de la navigation compte tenu des accélérations induites par les différentes vitesses dans les segments de route et/ou par les éléments de l'infrastructure connus.

La prise en compte des accélérations d'interface entre les arcs adjacents pose un problème dans la modélisation du réseau routier en tant que graphe direct (art antérieur) et surtout dans l'assignation des poids à chaque arc. En particulier, chaque nœuds du graphe avec deux ou plus arcs entrants est critique car $v_{i-1}$ et par conséquent $E_{jump,i}$ ne sont pas uniques. Evidemment, ce fait empêche une assignation non ambiguë des poids sur les arcs. Donc, le graphe direct G n'est pas adéquat pour le modèle de consommation énergétique proposé. Cette ambiguïté peut être résolue en utilisant le graphe adjoint comme graphe pour la stratégie de navigation proposée.

Selon l'invention, on construit le graphe adjoint du réseau routier en mettant en œuvre les étapes suivantes :

i) on construit un graphe direct dudit réseau routier avec des nœuds et des arcs (également appelés segments ou arêtes), les nœuds du graphe direct correspondant aux intersections du réseau routier, et les arcs du graphe direct correspondant aux routes reliant les intersections ; et

ii) on construit le graphe adjoint dudit réseau routier avec des nœuds et des arcs, les nœuds du graphe adjoint correspondant aux arcs du graphe direct et les arcs du graphe adjoint correspondant à l'adjacence desdits arcs du graphe direct.

La figure 3 illustre de manière schématique et non limitative ces étapes de construction du graphe adjoint. Le réseau routier RR concerne une intersection entre deux routes. La première étape consiste à construire le graphe direct GD depuis le réseau routier. Le graphe direct GD comprend cinq nœuds N, correspondant aux quatre extrémités des routes et à l'intersection de celles-ci. De plus, le graphe direct GD comprend huit arcs A reliant les nœuds et correspondant aux routes du réseau routier RR. La deuxième étape consiste à construire le graphe adjoint GA à partir du graphe direct GD. Le graphe adjoint GA comprend huit nœuds N correspondant à chaque arc du graphe direct GD. De plus, le graphe adjoint GA comprend vingt arcs A correspondant à l'adjacence des nœuds N du graphe direct GD.

4) Détermination de l'énergie consommée pour chaque arc du graphe adjoint

Lors de cette étape, on détermine un poids à chaque arc du graphe adjoint. Le poids correspond à l'énergie consommée par le véhicule sur cet arc. Pour cela, on applique le modèle dynamique du véhicule pour chaque arc du graphe adjoint, en considérant la vitesse moyenne du véhicule sur cet arc, et l'accélération du véhicule pour atteindre la vitesse moyenne. Ainsi, il est possible de connaître de manière précise l'énergie consommée sur un arc, ce qui permet de déterminer un itinéraire optimal en termes de dépenses énergétiques.

L'utilisation du graphe adjoint $L(G)$ comme graphe de routage permet d'assigner de façon unique le poids à chaque arc du graphe, en découplant toutes les manœuvres possibles modélisées dans le graphe original $G$. Chaque arc du graphe adjoint représente un trajet sur deux arcs adjacents du graphe direct $G$, et donc chaque arc du graphe adjoint $L(G)$ contient des informations sur un arc du graphe direct original $G$ et aussi sur son arc en amont.

Cette propriété intrinsèque du graphe adjoint permet non seulement de considérer correctement les accélérations d'interface entre arcs adjacents, mais aussi de modéliser d'une manière plus réaliste l'impact de l'infrastructure sur la consommation d'énergie. Plus spécifiquement, selon une approche de modélisation proposée, le terme énergétique qui prend en compte les arrêts/redémarrages induits par l'infrastructure

$$E_{jump,i} = \int_0^{t_{jump1,i}} (\tilde{P}_{b1,i} + P_{aux}) \, dt + \int_0^{t_{jump2,i}} (\tilde{P}_{b2,i} + P_{aux}) \, dt$$

Cette considération peut être introduite uniquement sur les arcs du graphe adjoint qui représentent les situations suivantes :

- un feu de circulation ou un panneau d'arrêt est situé à la jonction entre une route en amont de priorité inférieure et une route en aval de priorité supérieure. De cette façon, les ondes vertes sur les grands axes ne sont pas pénalisées.
- les arcs en amont et en aval sont connectés par une manœuvre avec un angle de virage plus large qu'un seuil réglable.

Le graphe adjoint $L(G) = (V^*, A^*)$ d'un graphe G a comme nœuds les arcs du graphe $G$, donc $i \in A$ mais aussi $i \in V^*$. Donc, soit $w^*: A^* \rightarrow W^*$ une nouvelle fonction d'assignation de poids aux arcs du graphe adjoint. Le poids pour chaque arc $k \in A^*$ est défini comme suit :

$$W_k^* = \begin{cases} \bar{E}_{b,i} + E_{jump,i}, & si\ i - 1 \in V^*\ a\ des\ arcs\ entrants \\ \bar{E}_{b,i} + E_{jump,i} + \bar{E}_{b,i-1}, & si\ i - 1 \in V^*\ n'a\ pas\ d'arcs\ entrants \end{cases}$$

On rappelle que pour un véhicule électrique, l'énergie sur un arc peut être négative. Par conséquent, le poids de cet arc du graphe adjoint peut être négatif. En effet, le freinage peut permettre de récupérer de l'énergie dans la batterie.

5) Détermination de l'itinéraire

Lors de cette étape, on détermine l'itinéraire qui minimise la dépense énergétique du véhicule entre la position identifiée et la destination identifiée. Cette étape est réalisée en prenant en compte l'énergie consommée sur chaque arc du graphe adjoint. La détermination de l'itinéraire d'éco-navigation est mise en œuvre par un algorithme de chemin le plus court. L'algorithme de chemin le plus court détermine l'itinéraire sur le graphe adjoint en prenant en compte l'énergie consommée déterminée pour chaque arc. L'algorithme optimal qui calcule le plus court chemin dans un graphe orienté et pondéré à partir d'un sommet source est l'algorithme de Bellman-Ford. L'algorithme choisi est apte à prendre en compte un poids (c'est-à-dire une énergie consommée) négatif sur au moins un arc du graphe adjoint, à la différence d'autres algorithmes comme celui de Dijkstra qui, bien que plus rapide, n'est pas optimal en présence d'arcs avec poids négatifs.

Une fois que l'algorithme restitue la séquence optimale de nœuds du graphe adjoint, ce résultat peut être facilement reporté sur le graphe original, en générant la séquence de nœuds du graphe originale entre origine et destination correspondant au trajet optimal, c'est-à-dire l'itinéraire optimal en termes de dépense énergétique.

Selon une mise en œuvre de l'invention, l'approche présentée peut comporter une étape d'enregistrement hors ligne des informations globales historiques sur les conditions de trafic de différents jours d'une semaine choisie à différentes heures de la journée. L'adaptation en temps réel est mise en œuvre seulement après que le conducteur sélectionne le point de départ, la destination et l'heure de départ. Les N-meilleures éco-routes sont calculées à partir des données historiques. Leur coût total est ensuite mis à jour en fonction des conditions de trafic actuelles, et comparé afin de déterminer le meilleur itinéraire actuel en termes de consommation d'énergie. Cette solution permet la prise en compte en temps réel des conditions de trafic.

En effet, les conditions de trafic sont très variables au cours de la journée et pour avoir une solution optimale globale de l'éco-routing, il faudrait mettre à jour le coût énergétique de tous les arcs du graphe en fonction de l'heure de départ souhaitée pour la navigation. La taille du graphe peut être grande et le temps de calcul pour la mise à jour de tous les poids n'est pas adapté à une utilisation en temps réel.

Par ailleurs, selon une mise en œuvre de l'invention, l'itinéraire calculé peut être comparé à d'autres itinéraires obtenus au moyen de différents indices de performance, notamment le temps de parcours. Ainsi, l'utilisateur peut choisir selon les besoins le compromis plus intéressant entre consommation énergétique et temps de parcours.

Une étape facultative du procédé selon l'invention peut consister à afficher l'itinéraire déterminé, par exemple sur un écran d'un système de géolocalisation (GPS, Galiléo), d'un téléphone intelligent, sur le tableau de bord du véhicule, sur un site internet, etc. Ainsi, il est possible d'informer l'utilisateur ou tout autre personne (par exemple un gestionnaire de flotte de véhicules, un responsable d'infrastructure routière...) de l'itinéraire d'éco-navigation. Il est également possible d'afficher l'énergie consommée pour l'itinéraire, qui est estimée au moyen du modèle et du graphe adjoint.

Le procédé selon l'invention peut être utilisé pour les véhicules automobiles. Toutefois, il peut être utilisé dans le domaine du transport routier, le domaine des deux-roues, etc...

L'invention concerne par ailleurs un produit programme d'ordinateur téléchargeable depuis un réseau de communication et/ou enregistré sur un support lisible par ordinateur et/ou exécutable par un processeur ou un serveur. Ce programme comprend des instructions de code de programme pour la mise en œuvre du procédé tel que décrit ci-dessus, lorsque le programme est exécuté sur un ordinateur ou un téléphone portable.

Exemples

Les deux exemples présentés ci-dessous permettent de montrer la bonne cohérence du modèle dynamique selon l'invention avec des valeurs mesurées. Le modèle dynamique utilisé pour ces deux exemples est le modèle exemplifié dans la demande (étape 2).

Les exemples ont été réalisés avec un véhicule électrique possédant les caractéristiques indiquées dans le tableau 1.

Tableau 1 - caractéristiques du véhicule

| Caractéristiques | Symbole | valeur |
|---|---|---|
| Masse du véhicule | $m$ | 1190 kg |
| Rayon de roue | $r$ | 0.2848 m |
| Rapport de transmission | $\rho_t$ | 5.763 |
| Rendement de transmission | $\eta_t$ | 0.95 |
| Accélération | $a$ | 1,5 m/s$^2$ |
| Coefficient | $a_0$ | 125.73 N |
| Coefficient | $a_1$ | 1.72 N/(m/s) |
| Coefficient | $a_2$ | 0.58 N/(m/s)$^2$ |
| Couple minimal du moteur | $T_{m,min}$ | -50 Nm |
| Couple maximal du moteur | $T_{m,max}$ | 200 Nm |
| Rendement du moteur électrique | $\eta_b$ | 0.85 |

Les résultats expérimentaux pour ces exemples ont été obtenus lors d'essais sur route ouverte en enregistrant la position et la vitesse par un capteur GPS. Les essais ont été réalisés en ville, sur différents types de routes pour vérifier la robustesse et la précision de prédiction de la consommation par le modèle dynamique du procédé selon l'invention. Les répétitions d'un même parcours ont été effectuées toujours à la même heure de départ sur plusieurs jours. La consommation énergétique utilisée comme référence par la suite a été calculée en utilisant le modèle dynamique décrit précédemment à partir du vrai profil de vitesse instantanée enregistré. L'estimation de la consommation énergétique par le modèle macroscopique objet de l'invention a été effectuée à partir de vitesses moyennes de trafic obtenues par les services en ligne de cartographie (de trafic).

Deux résultats de validation sont ici présentés. Ces résultats illustrent l'amélioration dans l'estimation de la consommation énergétique par rapport à la technique standard utilisée dans l'état de l'art.

*Premier cas d'étude*

La première étude de validation a été effectuée sur un trajet qui présente une combinaison de routes urbaines et autoroute.

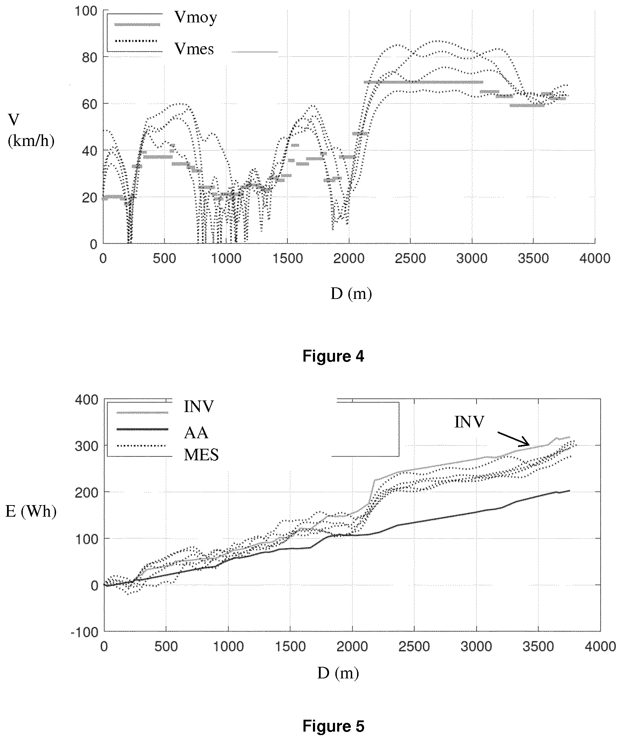

La figure 4 illustre, pour ce premier cas d'étude, les différentes vitesses mesurées Vmes (km/h) en fonction de la distance parcourue D (m) sur ce parcours. La figure 4, illustre également la vitesse moyenne Vmoy sur chaque segment du parcours. La vitesse moyenne Vmoy est obtenue en fonction des conditions de trafic par communication avec des services en ligne. Les profils de vitesse réels Vmes montrent de bonnes caractéristiques de répétabilité, même si ils correspondent à des jours différents. Les données macroscopiques de vitesse moyenne Vmoy représentent assez bien les conditions de trafic à l'heure des essais.

La figure 5 illustre, pour ce premier cas d'étude, le cumul d'énergie consommée E (Wh) sur la distance parcourue D (m) sur ce parcours. Sur ce graphe, sont représentés le cumul d'énergie consommée pour les valeurs mesurées MES (obtenues avec les vitesses mesurées), le cumul d'énergie consommée estimée avec la vitesse moyenne avec un modèle selon l'art antérieur AA ne prenant pas en compte l'accélération, et le cumul d'énergie consommée estimée avec le modèle selon l'invention INV prenant en compte l'accélération. Le modèle basé sur les vitesses moyennes AA sans la prise en compte des accélérations entraine des erreurs importantes de sous-estimation de la vraie consommation. L'erreur de ce type de modèle par rapport à la moyenne des valeurs finales d'énergie de la référence, dans ce premier

**EP 3 315 913 B1**

cas d'étude, est d'environ 30%. Le modèle dynamique proposé dans l'invention INV, qui prend en compte aussi les accélérations, est capable de suivre plus précisément les tendances de variation de la consommation. L'erreur d'estimation de l'énergie consommée par rapport à la référence est d'environ 7%.

*Deuxième cas d'étude*

La deuxième étude de validation a été effectuée sur un trajet qui présente seulement des routes urbaines secondaires.

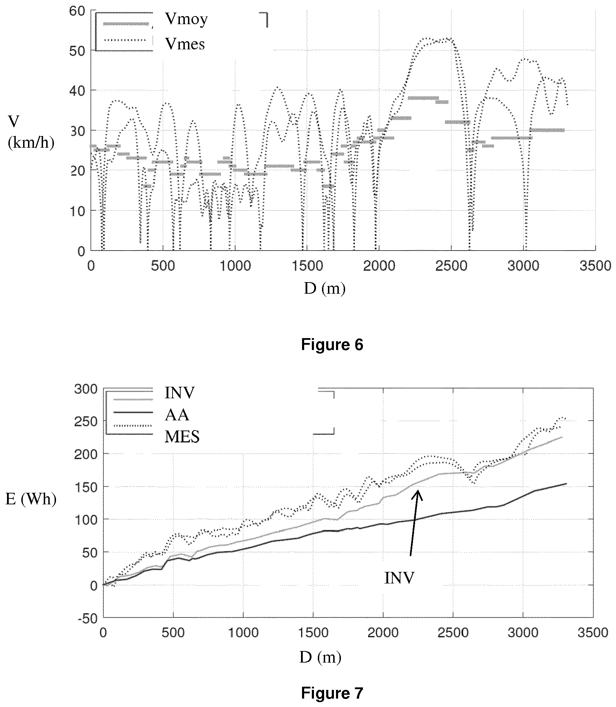

La figure 6 illustre, pour ce deuxième cas d'étude, les différentes vitesses mesurées Vmes (km/h) en fonction de la distance parcourue D (m) sur ce parcours. La figure 4, illustre également la vitesse moyenne Vmoy sur chaque segment du parcours. La vitesse moyenne Vmoy est obtenue en fonction des conditions de trafic par communication avec des services en ligne. Les profils de vitesse réels Vmes montrent de bonnes caractéristiques de répétabilité, même si ils correspondent à des jours différents. Les données macroscopiques de vitesse moyenne Vmoy représentent assez bien les conditions de trafic à l'heure des essais.

La figure 7 illustre, pour ce deuxième cas d'étude, le cumul d'énergie consommée E (Wh) sur la distance parcourue D (m) sur ce parcours. Sur ce graphe, sont représentés, le cumul d'énergie consommée pour les valeurs mesurées MES (obtenues avec les vitesses mesurées), le cumul d'énergie consommée estimée avec la vitesse moyenne avec un modèle selon l'art antérieur AA ne prenant pas en compte l'accélération, et le cumul d'énergie consommée estimée avec le modèle selon l'invention INV prenant en compte l'accélération. Dans ce deuxième cas d'étude, les modèles basés sur les vitesses moyennes selon l'art antérieur AA sans la prise en compte des accélérations font des erreurs de sous-estimation encore plus importantes de la vraie consommation. L'erreur par rapport à la référence est d'environ 38%. Ce comportement est dû au fait que sur des routes urbaines secondaires la précision et la fiabilité des données macroscopiques de vitesse moyenne sont beaucoup plus faibles. Donc, les vitesses moyennes sont moins représentatives des vraies conditions du trafic, ce qui peut poser des problèmes aussi aux modèles qui intègrent les accélérations d'interface. En particulier, si les données macroscopiques fournissent des vitesses moyennes qui ne varient pas ou très peu entre les différents segments de routes, la prise en compte des accélérations d'interface n'est plus suffisante pour une correcte prédiction de la consommation énergétique.

C'est la raison pour laquelle l'invention permet également d'enrichir les données sur le réseau routier en intégrant les perturbations de vitesse induites par des éléments critiques de l'infrastructure routière.

Le modèle dynamique proposé dans l'invention est capable de suivre plus précisément les tendances de variation de la consommation. L'erreur d'estimation de l'énergie consommée par rapport à la référence est d'environ 9%.

**Revendications**

1. Procédé de détermination d'un itinéraire minimisant la dépense énergétique d'un véhicule circulant au sein d'un réseau routier (RR), comprenant les étapes suivantes :

    a) on identifie la position actuelle et la destination dudit véhicule ;
    b) on construit un modèle dynamique (MOD) dudit véhicule qui relie l'énergie consommée par ledit véhicule à la vitesse et à l'accélération dudit véhicule ;

    le procédé étant **caractérisé en ce qu'**on réalise les étapes suivantes:

    c) on construit un graphe adjoint (GA) dudit réseau routier entre ladite position identifiée dudit véhicule et ladite destination identifiée dudit véhicule en mettant en œuvre les étapes suivantes :

        i) on construit un graphe direct (GD) dudit réseau routier (RR) avec des nœuds (N) et des arcs (A), lesdits nœuds (N) dudit graphe direct (GD) correspondant aux intersections dudit réseau routier, et lesdits arcs (A) dudit graphe direct correspondant aux routes reliant lesdites intersections ; et
        ii) on construit ledit graphe adjoint (GA) dudit réseau routier (RR) avec des nœuds (N) et des arcs (A), lesdits nœuds (N) dudit graphe adjoint (GA) correspondant aux arcs (A) dudit graphe direct (GD) et lesdits arcs (A) dudit graphe adjoint (GA) correspondant à l'adjacence desdits arcs (A) dudit graphe direct (GD) ;

    d) on détermine l'énergie consommée par ledit véhicule pour chaque arc dudit graphe adjoint (GA) au moyen dudit modèle dynamique (MOD) du véhicule et d'une vitesse moyenne dudit véhicule sur un arc dudit graphe direct associé audit arc considéré et d'une accélération dudit véhicule pour atteindre ladite vitesse moyenne ;
    e) on détermine ledit itinéraire (ITI) entre ladite position identifiée dudit véhicule et ladite destination identifiée dudit véhicule au moyen d'un algorithme de chemin le plus court (ALG) qui minimise sur ledit graphe adjoint (GA) ladite énergie consommée, ledit algorithme de chemin le plus court étant apte à prendre en compte, le cas échéant, une énergie consommée négative sur au moins un arc dudit graphe adjoint.

2. Procédé selon la revendication 1, dans lequel on détermine ladite vitesse moyenne et ladite accélération dudit véhicule au moyen de conditions de trafic (TRA) et/ou de la topologie (TOP) et/ou des infrastructures dudit réseau routier.

3. Procédé selon la revendication 2, dans lequel lesdites conditions de trafic (TRA) sont obtenues en temps réel par communication avec des services de données en ligne.

4. Procédé selon la revendication 2, dans lequel lesdites conditions de trafic (TRA) sont stockées dans des moyens de stockage de données historiques.

5. Procédé selon l'une des revendications précédentes, dans lequel on construit ledit graphe adjoint (GA) au moyen de la topologie (TOP) dudit réseau routier.

6. Procédé selon l'une des revendications 2 à 5, dans lequel on détermine ladite topologie (TOP) dudit réseau routier (RR) par des moyens de géolocalisation.

7. Procédé selon l'une des revendications précédentes, dans lequel ledit modèle dynamique (MOD) du véhicule dépend de paramètres intrinsèques (PAR) dudit véhicule.

8. Procédé selon la revendication 7, dans lequel lesdits paramètres intrinsèques (PAR) dudit véhicule sont obtenus depuis une base de données, ou sont indiqués par un utilisateur.

9. Procédé selon l'une des revendications précédentes, dans lequel on affiche ledit itinéraire (ITI) sur un dispositif autonome ou sur le tableau de bord dudit véhicule.

10. Procédé selon l'une des revendications précédentes, dans lequel ledit modèle dynamique (MOD) dudit véhicule dépend de la demande de puissance d'au moins un système auxiliaire dudit véhicule.

11. Procédé selon la revendication 10, dans lequel ladite demande de puissance d'au moins un système auxiliaire est fonction de la température extérieure.

12. Procédé selon l'une des revendications précédentes, dans lequel ledit algorithme de chemin le plus court (ALG) est un algorithme de Bellman-Ford.

13. Produit programme d'ordinateur téléchargeable depuis un réseau de communication et/ou enregistré sur un support lisible par ordinateur et/ou exécutable par un processeur ou un serveur, comprenant des instructions de code de programme pour la mise en œuvre du procédé selon l'une des revendications précédentes, lorsque ledit programme est exécuté sur un ordinateur ou sur un téléphone portable.

**Patentansprüche**

1. Verfahren zur Bestimmung einer Route, die den Energieverbrauch eines Fahrzeugs minimiert, das innerhalb eines Straßennetzes (RR) fährt, die folgenden Schritte umfassend:

a) Es werden die aktuelle Position und das Ziel des Fahrzeugs identifiziert;
b) es wird ein dynamisches Modell (MOD) des Fahrzeugs konstruiert, welches die von dem Fahrzeug verbrauchte Energie mit der Geschwindigkeit und mit der Beschleunigung des Fahrzeugs verbindet;

wobei das Verfahren **dadurch gekennzeichnet ist, dass** die folgenden Schritte ausgeführt werden:

c) Es wird ein adjungierter Graph (GA) des Straßennetzes zwischen der identifizierten Position des Fahrzeugs und dem identifizierten Ziel des Fahrzeugs konstruiert, indem die folgenden Schritte durchgeführt werden:

i) Es wird ein direkter Graph (GD) des Straßennetzes (RR) mit Knoten (N) und Kanten (A) konstruiert, wobei die Knoten (N) des direkten Graphen (GD) den Kreuzungen des Straßennetzes entsprechen und die Kanten (A) des direkten Graphen den Straßen entsprechen, die diese Kreuzungen verbinden; und

ii) es wird der adjungierte Graph (GA) des Straßennetzes (RR) mit Knoten (N) und Kanten (A) konstruiert, wobei die Knoten (N) des adjungierten Graphen (GA) den Kanten (A) des direkten Graphen (GD) entsprechen und die Kanten (A) des adjungierten Graphen (GA) der Adjazenz der Kanten (A) des direkten Graphen (GD) entsprechen;

d) es wird die von dem Fahrzeug verbrauchte Energie für jede Kante des adjungierten Graphen (GA) mittels des dynamischen Modells (MOD) des Fahrzeugs und einer mittleren Geschwindigkeit des Fahrzeugs auf einer Kante des direkten Graphen, die der betrachteten Kante zugeordnet ist, und einer Beschleunigung des Fahrzeugs, um diese mittlere Geschwindigkeit zu erreichen, bestimmt;

e) es wird die Route (ITI) zwischen der identifizierten Position des Fahrzeugs und dem identifizierten Ziel des Fahrzeugs mittels eines Algorithmus des kürzesten Weges (ALG) bestimmt, welcher auf dem adjungierten Graphen (GA) die verbrauchte Energie minimiert, wobei der Algorithmus des kürzesten Weges in der Lage ist, gegebenenfalls eine negative verbrauchte Energie auf wenigstens einer Kante des adjungierten Graphen zu berücksichtigen.

2. Verfahren nach Anspruch 1, wobei die mittlere Geschwindigkeit und die Beschleunigung des Fahrzeugs mittels der Verkehrsbedingungen (TRA) und/oder der Topologie (TOP) und/oder der Infrastrukturen des Straßennetzes bestimmt werden.

3. Verfahren nach Anspruch 2, wobei die Verkehrsbedingungen (TRA) in Echtzeit durch Kommunikation mit Online-Datendiensten erhalten werden.

4. Verfahren nach Anspruch 2, wobei die Verkehrsbedingungen (TRA) in Mitteln zur Speicherung historischer Daten gespeichert sind.

5. Verfahren nach einem der vorhergehenden Ansprüche, wobei der adjungierte Graph (GA) mittels der Topologie (TOP) des Straßennetzes konstruiert wird.

6. Verfahren nach einem der Ansprüche 2 bis 5, wobei die Topologie (TOP) des Straßennetzes (RR) durch Geolokalisierung bestimmt wird.

7. Verfahren nach einem der vorhergehenden Ansprüche, wobei das dynamische Modell (MOD) des Fahrzeugs von inhärenten Parametern (PAR) des Fahrzeugs abhängt.

8. Verfahren nach Anspruch 7, wobei die inhärenten Parameter (PAR) des Fahrzeugs aus einer Datenbank erhalten werden oder von einem Benutzer angegeben werden.

9. Verfahren nach einem der vorhergehenden Ansprüche, wobei die Route (ITI) auf einer autonomen Vorrichtung oder auf dem Armaturenbrett des Fahrzeugs angezeigt wird.

10. Verfahren nach einem der vorhergehenden Ansprüche, wobei das dynamische Modell (MOD) des Fahrzeugs vom Leistungsbedarf wenigstens eines Hilfssystems des Fahrzeugs abhängt.

11. Verfahren nach Anspruch 10, wobei der Leistungsbedarf wenigstens eines Hilfssystems von der Außentemperatur abhängig ist.

12. Verfahren nach einem der vorhergehenden Ansprüche, wobei der Algorithmus des kürzesten Weges (ALG) ein Bellman-Ford-Algorithmus ist.

13. Computerprogrammprodukt, das von einem Kommunikationsnetz herunterladbar und/oder auf einem computerlesbaren Medium aufgezeichnet und/oder von einem Prozessor oder einem Server ausführbar ist und das Programmcodeanweisungen zur Durchführung des Verfahrens nach einem der vorhergehenden Ansprüche, wenn das Programm auf einem Computer oder auf einem Mobiltelefon ausgeführt wird, umfasst.

**Claims**

1.  Method for determining a route minimizing the energy expenditure of a vehicle travelling within a road network (RR), comprising the following steps:

    a) the current position and destination of said vehicle are identified;
    b) a dynamic model (MOD) of said vehicle is constructed, which relates the energy consumed by said vehicle to the speed and to the acceleration of said vehicle;

    the method being **characterized in that** the following steps are carried out:

    c) a line graph (GA) of said road network is constructed between said identified position of said vehicle and said identified destination of said vehicle by implementing the following steps:

    i) a directed graph (GD) of said road network (RR) is constructed with nodes (N) and arcs (A), said nodes (N) of said directed graph (GD) corresponding to the intersections of said road network, and said arcs (A) of said directed graph corresponding to the roads connecting said intersections; and
    ii) said line graph (GA) of said road network (RR) is constructed with nodes (N) and arcs (A), said nodes (N) of said line graph (GA) corresponding to the arcs (A) of said directed graph (GD) and said arcs (A) of said line graph (GA) corresponding to the adjacency of said arcs (A) of said directed graph (GD);

    d) the energy consumed by said vehicle is determined for each arc of said line graph (GA) by means of said dynamic model (MOD) of the vehicle and an average speed of said vehicle on an arc of said directed graph associated with said arc in question and an acceleration of said vehicle to reach said average speed;
    e) said route (ITI) between said identified position of said vehicle and said identified destination of said vehicle is determined by means of a shortest path algorithm (ALG) which minimizes, on said line graph (GA), said energy consumed, said shortest path algorithm being capable of taking into account, if applicable, a negative energy consumption on at least one arc of said line graph.

2.  Method according to Claim 1, wherein said average speed and said acceleration of said vehicle are determined by means of traffic conditions (TRA) and/or the topology (TOP) and/or infrastructures of said road network.

3.  Method according to Claim 2, wherein said traffic conditions (TRA) are obtained in real time by communication with online data services.

4.  Method according to Claim 2, wherein said traffic conditions (TRA) are stored in means for storing historical data.

5.  Method according to one of the preceding claims, wherein said line graph (GA) is constructed by means of said topology (TOP) of said road network.

6.  Method according to one of Claims 2 to 5, wherein said topology (TOP) of said road network (RR) is determined by geolocation means.

7.  Method according to one of the preceding claims, wherein said dynamic model (MOD) of the vehicle depends on intrinsic parameters (PAR) of said vehicle.

8.  Method according to Claim 7, wherein said intrinsic parameters (PAR) of said vehicle are obtained from a database, or are provided by said user.

9.  Method according to one of the preceding claims, wherein said route (ITI) is displayed on a standalone device or on the instrument panel of said vehicle.

10. Method according to one of the preceding claims, wherein said dynamic model (MOD) of said vehicle depends on the power requirement of at least one auxiliary system of said vehicle.

11. Method according to Claim 10, wherein said power requirement of at least one auxiliary system is dependent on the outside temperature.

**12.** Method according to one of the preceding claims, wherein said shortest path algorithm (ALG) is a Bellman-Ford algorithm.

**13.** Computer program product that is downloadable from a communication network and/or recorded on a computer-readable medium and/or executable by a processor or a server, comprising program code instructions for implementing the method according to one of the preceding claims, when said program is executed on a computer or on a mobile phone.

**Figure 1**

**Figure 2**

RR                    GD                              GA

**Figure 3**

**Figure 4**

**Figure 5**

**Figure 6**

**Figure 7**

**RÉFÉRENCES CITÉES DANS LA DESCRIPTION**

**Documents brevets cités dans la description**

- FR 2994923
- US 9286737 B
- US 2012123657 A
- US 2012179315 A
- US 2012066232 A
- US 9091560 B
- EP 2669632 A2
- EP 1918895 A2
- US 20030045999 A1

**Littérature non-brevet citée dans la description**

- **ANDERSEN O ; JENS CS ; TORP K ; YANG B.** EcoTour : Reducing the environmental footprint of vehicles using eco-routes. *Proc. 2013 IEEE 14th Int. Conf. on Mobile Data Management, Milan, Italy,* 2013
- **BORIBOONSOMSIN K ; BARTH MJ ; ZHU W ; VU A.** Eco-routing navigation system based on multisource historical and real-time traffic information. *IEEE Trans. on Intelligent Transportation Systems,* 2012, vol. 13 (4), 1694-1704
- **BEN DHAOU I.** Fuel estimation model for ECO-driving and ECO-routing. *Proc. 2011 IEEE Intelligent Vehicles Symposium, Baden-Baden, Germany,* 05 Juin 2011, 37-42
- **ERICSSON E ; LARSSON H ; BRUNDELL-FREIJ K.** Optimizing route choice for lowest fuel consumption - Potential effects of a new driver support tool. *Transportation,* 2006, vol. 14, 369-383